# EUROPÄISCHE PATENTSCHRIFT

(11) **EP 0 478 808 B1**
(45) Veröffentlichungstag und Bekanntmachung des Hinweises auf die Patenterteilung: **07.12.1994**
(21) Anmeldenummer: 90118711.2
(22) Anmeldetag: 28.09.1990
(51) Int. Cl.: H02H 7/08

(54) **Aus einem Wechselstromnetz gespeister drehzahlgeregelter Gleichstrommotor**
Speed-controlled DC-motor with AC-current supply
Moteur à courant continu avec réglage de vitesse, alimenté à partir du réseau alternatif

(43) Veröffentlichungstag der Anmeldung: 08.04.1992
(73) Patentinhaber: SIEMENS AKTIENGESELLSCHAFT, 80333 München (DE)
(72) Erfinder: Simon, Helmut, Dipl.-Ing., W-7989 Argenbühl (DE); Döblinger, Rüdiger, Dipl.-Ing. (FH), W-8711 Rödelsee (DE); Klein, Hans-Wilhelm, Dipl.-Ing., W-8700 Würzburg (DE)

(56) Entgegenhaltungen:
- DE-A- 3 733 088
- DE-U- 8 816 326
- ELEKTRONIK, No. 7, 8. April 1983, MUNCHEN DE Seiten 65-68 ; M. HIESTAND : "Transistor statt Thyristor"

## Beschreibung

Die Erfindung bezieht sich auf einen Waschautomatenantrieb mit einem aus einem Wechselstromnetz gespeisten drehzahlgeregelten Gleichstrommotor gemäß Oberbegriff des Anpruchs 1; ein derartiger Waschautomatenantrieb ist aus der Zeitschrift "Elektronik", Heft 7, 1983, Seiten 65-69, bekannt.

Im vorgenannten bekannten Fall wird für ein Motorregelsystem für Waschmaschinen als Transistor-Motorsteller ein Hochvolt-Darlington-Schalttransistor in Epitaxial-Planar-Technologie verwendet. Die Stromsignalverarbeitung wird für eine unterlagerte Stromregelung benutzt. Ein gesonderter Schutz für den gewählten Schalttransistor, insbesondere ein Blockier- bzw. Kurzschlußschutz mit übermäßiger Strom- bzw. Stromanstiegsbelastung bzw. ein Übertemperaturschutz sind im bekannten Fall nicht vorgesehen.

Durch das DE-U-88 16 326 ist eine Überstromschutzeinrichtung für eine Nähmaschine mit einem aus einem Wechselstromnetz über eine Gleichrichteranordnung gespeisten und von einer Drehzahlregelvorrichtung über einen Motorsteller mit einem MOS-Transistor drehzahlregelbaren Gleichstrommotor derart bekannt, daß der Motorsteller beim Auftreten von Stromlastspitzen über einen Schwellwertschalter abschaltbar ist, der parallel zu einem in Reihe mit dem Motorsteller liegenden Meßwiderstand angeschlossen ist.

Durch die DE-A1-37 33 088 ist eine Überstromschutzvorrichtung für einen Verbraucher in einem Kraftfahrzeug bekannt, bei der ein von einem Steuerteil über ein Sperrteil mit einem Flip-Flop betätigbarer Halbleiterschalter, z.B. für eine Kraftstoffpumpe, derart in Abhängigkeit von einer Strommeßschaltung mit einem den laststromdurchflossenen Strommeßwiderstand gestellt ist, daß bei im Vergleich zu einem Referenzwert zu großem Laststrom das Flip-Flop rückgesetzt wird.

Ausgehend von einem Waschautomatenantrieb der eingangs genannten Art kann trotz geringen konstruktiven und schaltungstechnischen Aufwandes eine hohe Betriebssicherheit, insbesondere durch einen voll gewährleisteten Überstrom- sowie Übertemperaturschutz des spezifisch gewählten Transistor-Motorstellers erfindungsgemäß durch die Lehre des Anspruchs 1 erreicht werden; vorteilhafte Ausgestaltungen der Erfindung sind jeweils Gegenstand der Unteransprüche.

Der als Transistor-Motorsteller vorgesehene MOS-Transistor oder IGBT-Transistor erlaubt als kostengünstiges Bauteil eine hohe Schaltfrequenz oberhalb der Hörgrenze und somit für den Betrieb eines Waschautomaten mit vorteilhafter geringer Geräuschentwicklung, wobei erfindungsgemäß mit geringem Aufwand trotzdem ein voller Schutz des Motorstellers gegen Stromüberbeanspruchungen, insbesondere im Blockier- bzw. Kurzschlußfall und unter Mitbenutzung von Bauteilen des vorbeschriebenen Überstromschutzes auch ein Übertemperaturschutz gewährleistet werden kann; eine besonders einfache und trotzdem voll wirksame Motorstromüberwachung ist dabei durch einen Stromerfassungswiderstand in Form eines in der Motorstromleitung liegenden mäanderförmigen Widerstands-Leitungsabschnittes möglich.

Ein Kurzschlußschutz, z.B. im Falle eines Windungsschlusses des Gleichstrommotors, für den Transistor-Motorsteller wird dadurch in vorteilhafter Weise noch weiter verbessert, daß dem Transistor-Motorsteller eine die Stromanstiegsgeschwindigkeit im Motorstromkreis entsprechend begrenzende Zusatzinduktivität vergeschaltet ist.

Die Drehzahlspreizung zwischen Waschdrehzahl einerseits und maximaler Schleuderdrehzahl andererseits kann nach einer weiteren Ausgestaltung der Erfindung durch eine im Sinne einer erhöhten mittleren Motorspannung vergrößerte Kapazität des an sich vorhandenen Glättungskondensators erreicht werden.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin Zeigen:

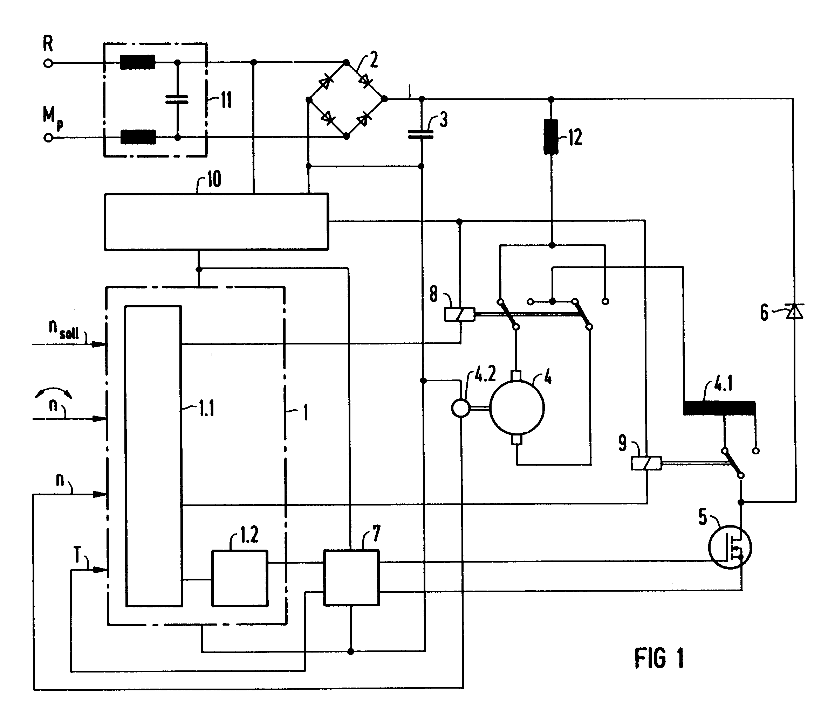

- FIG 1: das Gesamtschaltbild eines aus einem Einphasen-Wechselstromnetz über eine Drehzahlregeleinrichtung speisbaren Gleichstrommotor zum Antrieb eines Waschautomaten,
- FIG 2: in einem Ausschnitt aus FIG 1 die Stromüberwachungsvorrichtung gemäß einer Ausgestaltung vorliegender Erfindung,
- FIG 3: die zusätzliche Temperatur-Überwachungsschaltung gemäß einer Ausgestaltung vorliegender Erfindung,
- FIG 4: die Spannungsversorgung für die Motorrelais und die Logikschaltung und die Motorstrom-Überwachungsvorrichtung gemäß einer Ausgestaltung vorliegender Erfindung.

Ein für einen Waschautomatenantrieb vorgesehener, durch eine Feldwicklung 4.1 erregter Reihenschluß-Gleichstrommotor 4 wird aus einem speisenden Einphasen-Wechselstromnetz R;Mₚ über einen Entstörfilter 11 und einer Gleichrichteranordnung 2 mit ausgangsseitig parallel geschaltetem Glättungskondensator 3 gespeist. Die Stellung der Motordrehzahl des Gleichstrommotors 4 erfolgt über die Motorspannung durch einen Transistor-Motorsteller 5 mit einer Motorstrom-Überwachungsvorrichtung 7 und einem Freilaufkreis mit einer Freilaufdiode 6. Die je nach angewähltem Waschprogramm vorgesehenen Drehzahlwerte nₛₒₗₗ bzw. Reversierzyklen n werden einer programmsteuerbaren Drehzahlregelvorrichtung 1 von einem hier nicht dargestellten externen Programmsteuergerät vorgegeben.

Zur Drehrichtungsumkehr des Gleichstrommotors 4 dient ein Relais 8; ein weiteres Relais 9 ist zur Umschaltung der Feldwicklung 4.1 zur Veränderung der Drehzahl, insbesondere zur größeren Drehzahlspreizung vorgesehen. Die Relais 8,9 und die Drehzahlregelvorrichtung 1 sowie die Motorstrom-Überwachungsvorrichtung 7 werden über ein Netzteil 10 von der speisenden Einphasen-Wechselstromquel le R;Mₚ versorgt. Als Ist-Werte werden der Drehzahlregelvorrichtung 1 zumindest die jeweiligen Drehzahlwerte des Gleichstrommotors 4 von einem mit dessen Rotorwelle gekuppelten Tachogenerator 4.2 und der jeweilige Erwärmungs-Temperaturwert T von der Motorstrom-Überwachungsvorrichtung 7 eingegeben.

Die Drehzahlregelvorrichtung 1 weist u.a. als diskrete Bauteile einen digitalen Mikrorechner 1.1 sowie einen mikrocomputergesteuerten digitalen Pulsbreiten-Modulator 1.2 auf. Durch die Aufteilung des Logikteiles in einen getrennten Mikrorechner 1.1 und einen getrennten Pulsbreiten-Modulator 1.2 kann in kostengünstiger Weise auf einen Mikrorechner mit integriertem Modulator verzichtet und stattdessen der diskrete Pulsbreiten-Modulator mit Standardbausteinen bestückt werden.

Der digitale Mikrorechner 1.1 erfüllt neben der digitalen Drehzahlregelung nach einem proportional-integralem Regelalgorithmus auch noch weitere Aufgaben wie z.B. die Überwachung des Drehzahl-Istwert-Signals des Tachogenerators sowie die Umsetzung der von dem externen Programmsteuergerät binär codiert vorgegebenen Drehzahlen in Sollwerte der Drehzahlregelung sowie der Kontrolle der Wäscheverteilung in der Trommel auf Unwucht durch Auswertung des Drehzahl-Istwertes hinsichtlich periodischer Schwankungen und der Abwicklung eines Korrekturprogramms bei festgestellter zu hoher Unwucht.

Die Motorstrom-Überwachungsvorrichtung 7 dient insbesondere der Strombegrenzung und somit dem Schutz des Transistor-Motorstellers 5 bei zu hohen Motorströmen, wie z.B. im Falle einer Blockierung der Waschtrommel Mit Gleichstrom betriebene Reihenschlußmotoren weisen Blockierströme auf, die das Zehn- bis Zwanzigfache des Betriebsstromes erreichen können. Der gewählte Transistor-Motorsteller 5 kann jedoch hinsichtlich der Belastbarkeit eines nur zweifachen Betriebsstromes und damit besonders kostengünstig ausgelegt werden, wenn die Begrenzung des Motorstromes gemäß der vorgesehenen Motorstrom-Überwachungsvorrichtung 7 auf seine entsprechende Stromtragfähigkeit ausgelegt ist und auch einen Blockierschutz und gegebenenfalls Kurzschlußschutz des Gleichstrommotors 4 beinhaltet.

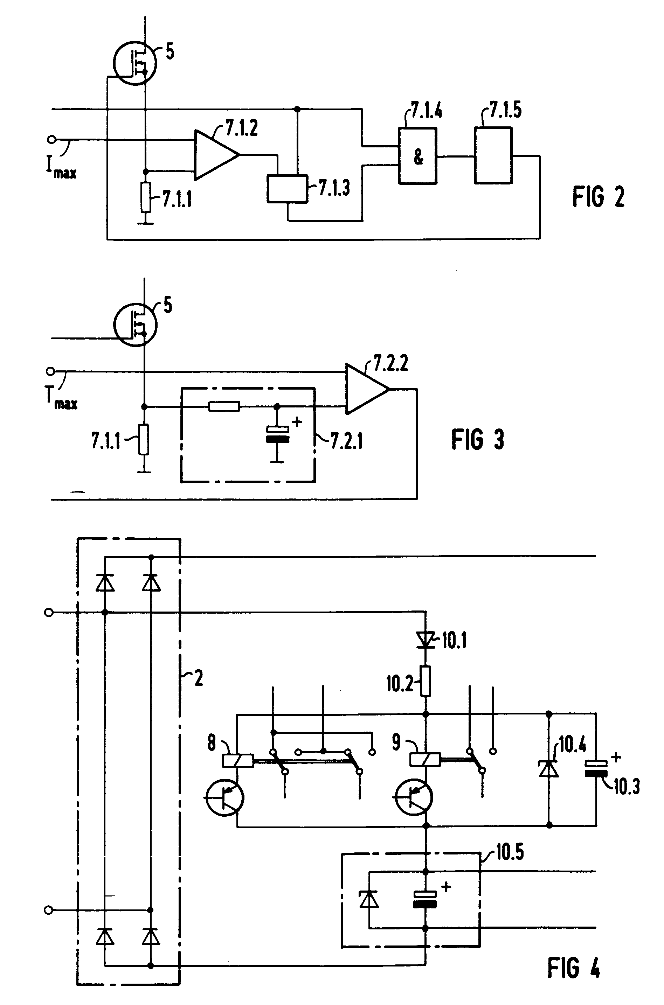

Die in FIG 2 näher dargestellte Motorstrom-Überwachungsvorrichtung 7 weist einen, vorzugsweise im Zuge der Leitung liegenden mäanderförmigen, Stromerfassungswiderstand 7.1.1, einen Komparator 7.1.2, einen Flip-Flop 7.1.3, einen Torschalter 7.1.4 und gegebenenfalls einen Treiberschalter 7.1.5 zur Ansteuerung des Transistor-Motorstellers 5 auf. Der Flip-Flop 7.1.3 ist als R-S-Flip-Flop ausgeführt und wird von dem digitalen Mikrorechner 1.1. beim Einschalten gesetzt, so daß betriebsmäßig das Steuersignal für den Transistor-Motorsteller 5 freigegeben ist. Der Komparator 7.1.2 vergleicht den am Stromerfassungswiderstand 7.1.1 auftretenden Spannungsabfall mit einem Spannungsreferenzwert, der den zulässigen maximalen Stromwert repräsentiert. Wird dieser Wert erreicht, so setzt der Komparator 7.1.2 das Flip-Flop 7.1.3 zurück, so daß über den Torschalter 7.1.4 und den Treiberschalter 7.1.5 der Transistor-Motorsteller 5 gesperrt wird. Bei jeder Taktung wird dann automatisch neu abgetastet, ob der zu hohe Strom noch ansteht oder ob der Transistor-Motorsteller wieder für eine betriebsmäßige Taktung freigegeben werden kann.

Durch Anordnung einer Zusatzinduktivität 12 in Reihe zum Gleichstrommotor 4 kann auch ein Schutz des Transistor-Motorstellers 5 im Falle eines Kurzschlusses im Motorspeisekreis, insbesondere im Fall des Ausfalls der Motorwicklungsinduktivität bei Windungsschluß im Gleichstrommotor 4, voll sichergestellt werden; hierbei dient die Zusatzinduktivität 12 zur Begrenzung der Stromanstiegsgeschwindigkeit, um dem Transistor-Motorsteller 5 trotz seiner hohen Schaltgeschwindigkeit genügend Zeit zum Abschalten über die Motorstrom-Überwachungsvorrichtung (8) zur Verfügung zu stellen.

Als Übertemperatur-Schutz ist in vorteilhafter Weise der nach einer Ausgestaltung mäanderförmig ausgebildete Stromerfassungswiderstand 7.1.1 der Motorstrom-Überwachungsvorrichtung 7 mitbenutzt. Aus dem im Stromerfassungswiderstand 7.1.1 gemessenen Strom wird mittels eines Glättungsgliedes 7.2.1 ein die Temperatur des Transistor-Motorstellers 5 repräsentierender Strommittelwert gebildet, dessen Amplitude durch einen Komparator 7.2.2 mit einem Ansprechwert, der der maximal zulässigen Temperatur des Transistor-Motorstellers 5 entspricht, verglichen wird. Ist der genannte, der Übertemperatur entsprechende Wert überschritten, so wird über eine entsprechende Abfrage des Ausgangs des Komparators 7.2.2 durch den digitalen Mikrorechner 1.1 der Transistor-Motorsteller 5 abgeschaltet und nach einer durch den digitalen Mikrorechner 1.1 vorgebbaren Abkühlzeit wieder eingeschaltet. Das Glättungsglied 7.2.1 besitzt eine Zeitkonstante, die der thermischen Zeitkonstante des Kühlkörpers des Transistor-Motorstellers 5 entspricht.

Wenn die thermische Zeitkonstante des Gleichstrommotors 4 größer oder zumindest gleich groß ist wie die des Kühlkörpers des Transistor-Motorstellers 5, ist mit der vorbeschriebenen Stromüberwachungsvorrichtung 7 auch ein Schutz des Gleichstrommotors 4 gegen eine Übertemperaturbelastung gegeben.

Das Netzteil 10 weist gemäß FIG 4 einen Einweggleichrichter 10.1 und einen Vorwiderstand 10.2 auf. Eine Potentialtrennung der Logikversorgung der Drehzahlregelvorrichtung 1 bzw. der Motorstrom-Überwachungsvorrichtung 7 gegenüber der Stromversorgung des Gleichstrommotors 4 ist nicht erforderlich. Die Spannungsversorgung für die Relais 8;9 einerseits sowie die Drehzahlregelvorrichtung 1 und die Motorstrom-Überwachungsvorrichtung 7 erfolgt gemäß Ausgestaltung der Erfindung in gegenseitiger Reihenschaltung, wobei parallel zu den Relais 8 bzw.9 ein Elektrolytkondensator 10.3 und eine Zenerdiode 10.4 und in ähnlicher Weise parallel zur Spannungsversorgung für die Drehzahlregelvorrichtung 1 und die Motorstrom-Überwachungsvorrichtung 7 eine Glättungs- und Spannungsbegrenzerschaltung 10.5 mit einem Kondensator und einer Zenerdiode vorgesehen sind. Der Rückfluß des Versorgungsstroms für die Logikschaltung zum speisenden Einphasen-Wechselstromnetz R;Mₚ erfolgt über die Gleichrichteranordnung 2.

## Patentansprüche

1. Waschautomatenantrieb mit einem aus einem Wechselstromnetz gespeisten drehzahlgeregelten Gleichstrommotor mit zumindest einem über eine Gleichrichteranordnung (2) mit Glättungskondensator (3) an das Wechselstromnetz (R;Mₚ) über ein Netzteil (10) anschließbaren Transistor-Motorsteller (5), der in Schaltabhängigkeit von einer programmsteuerbaren Drehzahlregelvorrichtung (1) und einer Stromsignalverarbeitung steht, **dadurch gekennzeichnet**, daß als Transistor-Motorsteller (5) ein MOS-Transistor oder IGBT-Transistor vorgesehen ist, der zusätzlich in Schaltabhängigkeit von einer Motorstrom-Überwachungsvorrichtung (7) mit zumindest einem den Stromistwert erfassenden Stromerfassungswiderstand (7.1.1) und einem Flip-Flop (7.1.3) gestellt ist, das betriebsmäßig von der Drehzahlregelvorrichtung (Mikrorechner 1.1) im Sinne einer Ansteuerung des Transistor-Motorstellers (5) setzbar und bei Überstrom über den Stromistwert mittels eines ersten Komparators (7.12) ricksetzbar ist, und daß mittels eines zweiten Komparators (7.2.2) bei Überschreiten eines einem maximalen Erwärmungswert für den Transistor-Motorsteller (5) entsprechenden Stromwertes über einen dessen jeweiligen Erwärmungs-Istwert repräsentierenden Strommittelwert an einem aus dem Stromerfassungswiderstand (7.1.1) gespeisten Glättungsglied (7.2.1), dessen elektrische Zeitkonstante der thermischen Zeitkonstante des Kühlkörpers des Transistor-Motorstellers (5) entspricht, der Transistor-Motorsteller (5) abschaltbar ist.

2. Waschautomatenantrieb nach Anspruch 1, **gekennzeich****net durch** einen Stromerfassungswiderstand (7.1.1) in Form einer mäanderförmigen Leiterbahn im Zuge des Motorspeisekreises.

3. Waschautomatenantrieb mit zusätzlichem Übertemperaturschutz nach Anspruch 1 oder 2, **gekennzeichnet durch** einen MOS-Transistor mit integriertem Temperatursensor.

4. Waschautomatenantrieb nach einem der Ansprüche 1-3, **gekennzeichnet durch**eine im Sinne einer vergrößerten Drehzahlspreizung durch erhöhte mittlere Motorspannung bestimmte erhöhte Kapazität des Glättungskondensators (3).

5. Waschautomatenantrieb nach einem der Ansprüche 1-4, **dadurch gekennzeichnet**, daß die Drehzahlregeleinrichtung (1) als jeweils diskrete Bauteileinheit zumindest einen digitalen Mikrorechner (1.1) und einen, insbesondere aus Standardbausteinen gebildeten, digitalen Pulsbreitenmodulator (1.2) enthält.

6. Waschautomatenantrieb nach einem der Ansprüche 1 bis 5, **dadurch gekennzeichnet**, daß dem Transistor-Motorsteller (5) eine die Stromanstiegsgeschwindigkeit im Motorstromkreis entsprechend begrenzende Zusatzinduktivität (12) vorgeschaltet ist.

7. Waschautomatenantrieb mit jeweils einem Relais (8 bzw.9) zur Drehrichtungsumkehrpolung bzw. Erregerwicklungsumschaltung nach einem der Ansprüche 1-6, **gekennzeichnet** **durch** eine Reihenschaltung der Spannungsversorgung der Drehzahlregeleinrichtung (1) bzw. der Motorstrom-Überwachungsvorrichtung (7) einerseits und der Relais (8 bzw.9) andererseits.

## Claims

1. Automatic washing-machine drive having a speed-controlled D.C. motor which is fed from an A.C. system, having at least one transistor-motor actuator (5) which by way of a rectifier arrangement (2) with smoothing capacitor (3) can be connected to the A.C. system (R;Mₚ) by way of a power supply unit (10) and which is in a switching-dependent relationship with a speed-control arrangement (1), which can be controlled by program, and a current signal-processing unit, characterised in that provided as a transistor-motor actuator (5) there is an MOS-transistor or an IGBT-transistor which is additionally actuated in a switching-dependent relationship with a motor current-monitoring arrangement (7) having at least one current-detection resistor (7.1.1), which detects the actual current value, and with a flip-flop (7.1.3) which can be set in terms of operation by the speed-control arrangement (microcomputer 1.1) for the purposes of activating the transistor-motor actuator (5) and can be reset in the case of excess current above the actual current value by means of a first comparator (7.12), and in that the transistor-motor actuator (5) can be switched off by means of a second comparator (7.2.2), when a current value corresponding to a maximum temperature-rise value for the transistor-motor actuator (5) is exceeded above a mean current value representing the respective actual temperature-rise which is represented by a smoothing element (7.2.1) which is fed from the current-detection resistor (7.1.1), whereby the electrical time constant of the smoothing element corresponds to the thermal time constant of the cooling body of the transistor-motor actuator (5).

2. Automatic washing-machine drive according to claim 1, characterised by a current-detection resistor (7.1.1) in the form of a meander-shaped printed conductor in the course of the motor feed circuit.

3. Automatic washing-machine drive having additional overtemperature protection according to claim 1 or 2, characterised by an MOS-transistor with integrated temperature sensor.

4. Automatic washing-machine drive according to one of the claims 1-3, characterised by an increased capacitance of the smoothing capacitor (3), which increased capacitance is determined for the purposes of an extended speed spread as a result of increased mean motor voltage.

5. Automatic washing-machine drive according to one of the claims 1-4, characterised in that the speed-control device (1) contains, in each case as a discrete component unit, at least one digital microcomputer (1.1) and a digital pulse-width modulator (1.2) which, in particular, is formed from standard modules.

6. Automatic washing-machine drive according to one of the claims 1-5, characterised in that an additional inductor (12), appropriately limiting the rate of current rise in the motor current circuit, is connected upstream of the transistor-motor actuator (5).

7. Automatic washing-machine drive having a respective relay (8 and 9) for direction of rotation reversal-polarization and excitation winding switch-over according to one of the claims 1-6, characterised by a series circuit arrangement of the voltage supply of the speed-control device (1) and the motor current-monitoring arrangement (7) on the one hand and the relays (8 and 9 respectively) on the other hand.

## Revendications

1. Dispositif d'entraînement de machine à laver, comportant un moteur à courant continu, qui est régulé en vitesse, qui est alimenté par un réseau à courant alternatif, qui comprend au moins un régulator (5) de moteur à transistor, que l'on peut connecter par l'intermédiaire d'un dispositif (2) redresseur à condensateur (3) de lissage au réseau (R;Mₚ) à courant alternatif par l'intermédiaire d'un bloc (10) d'alimentation, et dont la commutation dépend d'un dispositif (1) régulateur de vitesse commandé par programme et d'un traitement de signal en courant, daractérisé en ce qu'il est prévu comme régulateur (5) de moteur à transistor un transistor MOS ou transistor IGBT, dont la commutaion est en outre établie en fonction d'un dispositif (7) de contrôle de courant de moteur comportant au moins une résistance (7.1.1) de détection de courant détectant la valeur réelle du courant et une bascule bistable (7.1.3), qui peut être positionnée fonctionnellement par le dispositif régulateur de vitesse (micro-ordinateur 1.1) en vue de commander le régulateur (5) de moteur à transistor et qui, en cas de surintensité de courant, peut être réinitaialisée par l'intermédiaire de la valeur réelle de courant au moyen d'un premier comparateur (7.12) et le régulateur (5) de moteur à transistor peut être coupé, en cas de dépassement d'une valeur de courant correspondant à une valeur d'échauffement maximale pour le régulateur (5) de moteur à transistor, au moyen d'un deuxième comparateur (7.2.2), par l'intermédiaire d'une valeur moyenne du courant, représentant la valeur réelle respective d'échauffement de ce moteur, d'un filtre (7.2.1) de lissage, qui est alimenté par la résistance (7.1.1) de détection de courant, et dont la constante de temps électrique correspond à la constante de temps thermique du dissipateur de chaleur du régulateur (5) de moteur à transistor.

2. Dispositif d'entraînement de machine à laver suivant la revendication 1, caractérisé par une résistance (7.1.1) de détection de courant ayant la forme d'une piste conductrice sinueuse située dans le circuit d'alimentation du moteur.

3. Dispositif d'entraînement de machine à laver, à protection contre l'échauffement suivant les revendications lou 2, caractérisé par un transistor MOS à capteur intégré de température.

4. Dispositif d'entraînement de machine à laver suivant l'une des revendications 1 à 3, caractérisé par, en vue d'une variation plus grande de vitesse, une plus grande capacité du condensateur (3) de lissage, qui est déterminée par une tension moyenne de moteur plus grande.

5. Dispositif d'entraînement de machine à laver suivant l'une des revendications 1 à 4, caractérisé en ce que le dispositif (1) régulateur de vitesse comprend comme unité respective de composants discrets au moins un micro-ordinateur (1.1) numérique et un modulateur (1.2) d'impulsions en largeur numérique et formé notamment de composants normalisés.

6. Dispositif d'entraînement de machine à laver suivant l'une des revendications 1 à 5, caractérisé en ce qu'une inductance (12) supplémentaire, qui limite de facon correspondante la vitesse de montée du courant dans le circuit du moteur, est branchée en amont du régulateur (5) de moteur à transistor.

7. Dispositif d'entraînement de machine à laver comportant un relais (8 et 9) d'inversion de sens de rotation ou d'inversion de bobinage d'excitation suivant l'une des revendications 1 à 6, caractérisé par un montage en série de l'alimentation en tension du dispositif (1) régulateur de vitesse ou du dispositif (7) de contrôle de courant de moteur d'une part et du relais (8 ou 9) d'autre part.
